(19) Europäisches Patentamt
European Patent Office
Office européen des brevets

(11) EP 2 878 640 A1

(12) **EUROPEAN PATENT APPLICATION**
published in accordance with Art. 153(4) EPC

(43) Date of publication:
**03.06.2015 Bulletin 2015/23**

(21) Application number: **13823537.9**

(22) Date of filing: **25.07.2013**

(51) Int Cl.:
***C08L 83/07*** *(2006.01)* ***C08K 3/36*** *(2006.01)*
***C08K 5/54*** *(2006.01)* ***C08L 83/05*** *(2006.01)*

(86) International application number:
**PCT/JP2013/070153**

(87) International publication number:
**WO 2014/017579 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.07.2012 JP 2012165131**

(71) Applicant: **Sumitomo Bakelite Company Limited**
**Shinagawa-ku**
**Tokyo 140-0002 (JP)**

(72) Inventors:
- **BRICK Chad**
  **TOKYO 140-0002 (JP)**
- **MORI Motoko**
  **Tokyo 140-0002 (JP)**

(74) Representative: **Jones, Elizabeth Louise**
**Dehns**
**St Bride's House**
**10 Salisbury Square**
**London**
**EC4Y 8JD (GB)**

# (54) SILICONE RUBBER-BASED CURABLE COMPOSITION

(57) A silicone rubber-based curable composition includes vinyl siloxane, hydrogen siloxane and silica particles, where the content of the silica particles is 26.0 wt% or more and less than 40.0 wt%, and when cured, it can form a silicone rubber exhibiting a physical property of a JIS K6253 (2006) type A durometer hardness of 40.0 mN or more. Further a method for manufacturing a silicone rubber-based curable composition includes a step of obtaining a kneaded product by kneading vinyl siloxane, hydrogen siloxane, silica particles, a silane coupling agent and a catalyst, where the content of the silica particles in the kneaded product is in the range of 40 to 84 parts by weight relative to 100 parts by weight as the total amount of the vinyl siloxane and the hydrogen siloxane.

EP 2 878 640 A1

## Description

Technical Field

The present invention relates to a silicone rubber-based curable composition, a method for manufacturing a silicone rubber-based curable composition, a method for manufacturing a silicone rubber, a silicone rubber, a molded article and a tube.

Background Art

A silicone rubber is excellent in heat resistance, flame retardance, chemical stability, weather resistance, radiation resistance, electrical characteristics and the like, and is therefore used in various applications in a wide range of fields. Furthermore, since the silicone rubber is physiologically inactive and has little response to body tissues when it is brought into contact with living bodies, it is used as a material for medical instruments such as various catheters for medical uses.

Therefore, in order to improve the tear strength and the tensile strength of the silicone rubber, various methods are proposed (for example, Patent documents 1 to 7). Specific examples of methods for imparting high tear strength to the silicone rubber include addition of an inorganic filler such as silica fine particles to the silicone rubber, diversification in crosslink density (distributing areas having high crosslink densities and areas having low crosslink densities in a silicone rubber), and the like. It is conceived that the improvement of the tear strength by diversifying the crosslink density results from an action of the areas having high crosslink density as resistance force against the tear strength.

Prior Art Documents

Patent documents

Patent document 1: JP H07(1995)-331079
Patent document 2: JP H07(1995)-228782
Patent document 3: JP H07(1995)-258551
Patent document 4: USP 3,884,866
Patent document 5: USP 4,539,357
Patent document 6: USP 4,061,609
Patent document 7: USP 3,671,480

Disclosure of Invention

Problem to be Solved by the Invention

As a result of improvement in medical techniques, silicone rubbers that are further excellent in physical properties such as mechanical strength have been required in the medical field. Therefore, with the foregoing in mind, the present invention provides a silicone rubber-based curable composition, a method for manufacturing a silicone rubber-based curable composition, and a method for manufacturing a silicone rubber.

Means for Solving Problem

In one aspect, the present invention relates to a silicone rubber-based curable composition that includes vinyl group containing-organopolysiloxane (A), organohydrogen polysiloxane (B) and silica particles (C). In the composition, the content of the silica particles (C) is 26.0 wt% or more and less than 40.0 wt%, and the composition when cured can form a silicone rubber exhibiting a physical property of JIS K6253 (2006) type A durometer hardness of 40.0 mN or more.

In another aspect, the present invention relates to a method for manufacturing a silicone rubber-based curable composition, the method includes a step of obtaining a kneaded product by kneading vinyl group-containing organopolysiloxane (A), organohydrogen polysiloxane (B), silica particles (C), a silane coupling agent (D) and a catalyst (E). In the method, the content of the silica particles (C) in the kneaded product is in the range of 40 to 84 parts by weight relative to 100 parts by weight as the total amount of the vinyl group-containing organopolysiloxane (A) and the organohydrogen polysiloxane (B).

In a further aspect, the present invention relates to a method for manufacturing a silicone rubber including a

step of obtaining a silicone rubber-based curable composition by kneading vinyl group-containing organopolysiloxane (A), organohydrogen polysiloxane (B), silica particles (C), a silane coupling agent (D) and a catalyst (E), and a step of forming the silicone rubber by curing the silicone rubber-based curable composition. In the step of obtaining the silicone rubber-based curable composition, the content of the silica particles (C) in the kneaded product is in the range of 40 to 84 parts by weight relative to 100% by weight as the total amount of the vinyl group-containing organopolysiloxane (A) and the organohydrogen polysiloxane (B).

Effects of the Invention

The present invention can provide a silicone rubber-based curable composition for making a silicone rubber with a predetermined hardness, a method for manufacturing the silicone rubber-based curable composition, and a method for manufacturing a silicone rubber.

Description of the Invention

The present invention relates to the following aspects.

[1] A silicone rubber-based curable composition comprising vinyl group-containing organopolysiloxane (A), organohydrogen polysiloxane (B), and silica particles (C), wherein the content of the silica particles (C) is 26.0 wt% or more and less than 40.0 wt%, and the composition when cured is capable of forming a silicone rubber exhibiting a JIS K6253 (2006) type A durometer hardness of 40.0 mN or more.

[2] The silicone rubber-based curable composition according to [1], which is obtained by kneading the vinyl group-containing organopolysiloxane (A), the organohydrogen polysiloxane (B), the silica particles (C), a silane coupling agent (D) and a catalyst (E).

[3] The silicone rubber-based curable composition according to [2], wherein the kneading is carried out by an integral blend method.

[4] The silicone rubber-based curable composition according to any of [1] to [3], wherein the vinyl group-containing organopolysiloxane (A) is vinyl group-containing linear organopolysiloxane (A1).

[5] The silicone rubber-based curable composition according to [4], wherein the vinyl group-containing linear organopolysiloxane (A1) is represented by the following formula (1):

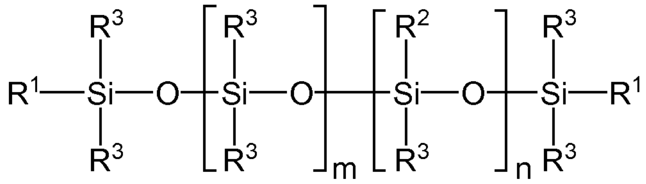

(1)

(in the formula (1), 'm' is an integer in the range of 1000 to 10000; 'n' is an integer in the range of 0 to 1000; each of $R^1$ and $R^2$ is a substituted or unsubstituted alkyl group, alkenyl group or aryl group having a carbon number of 1 to 10, or a hydrocarbon group as a combination thereof; at least one of the plural $R^1$ and $R^2$ is a vinyl group; and $R^3$ is a substituted or unsubstituted alkyl group or aryl group having a carbon number of 1 to 8, or a hydrocarbon group as a combination thereof.)

[6] The silicone rubber-based curable composition according to any one of [1] to [5], wherein the organohydrogen polysiloxane (B) is selected from the group consisting of: linear organohydrogen polysiloxane (B1), branched organohydrogen polysiloxane (B2), and a combination thereof.

[7] The silicone rubber-based curable composition according to [6], wherein the linear organohydrogen polysiloxane (B1) is represented by the following formula (2):

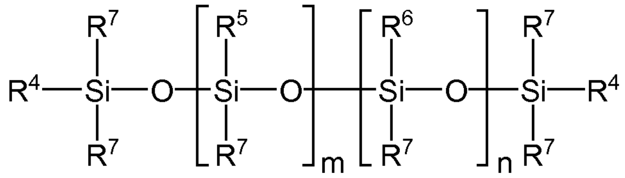

(2)

(in the formula (2), 'm' is an integer in the range of 0 to 300; 'n' is an integer in the range of 0 to 300 (here, m + n = 2 to 300); each of $R^4$, $R^5$ and $R^6$ is a substituted or unsubstituted alkyl group, alkenyl group or aryl group having a

carbon number of 1 to 10, or a hydrocarbon group as a combination thereof, or a hydride group; at least one of the plural $R^4$, $R^5$ and $R^6$ is a hydride group; and $R^7$ is a substituted or unsubstituted alkyl group or aryl group having a carbon number of 1 to 8, or a hydrocarbon group as a combination thereof.)

[8] The silicone rubber-based curable composition according to any one of [2] to [7], wherein the catalyst (E) is either platinum or a platinum compound.

[9] A method for manufacturing a silicone rubber-based curable composition, the method comprising a step of obtaining a kneaded product by kneading vinyl group-containing organopolysiloxane (A), organohydrogen polysiloxane (B), silica particles (C), a silane coupling agent (D), and a catalyst (E), wherein the content of the silica particles (C) in the kneaded product is in the range of 40 to 84 parts by weight relative to 100 parts by weight as the total amount of the vinyl group-containing organopolysiloxane (A) and the organohydrogen polysiloxane (B).

[10] The method for manufacturing a silicone rubber-based curable composition according to [9], wherein the step of obtaining the kneaded product comprises kneading a kneaded product of the vinyl group-containing organopolysiloxane (A) and the silane coupling agent (D) with the silica particles (C).

[11] The method for manufacturing a silicone rubber-based curable composition according to [9] or [10] for manufacturing the silicone rubber-based curable composition according to any one of [1] to [8].

[12] A method for manufacturing a silicone rubber, the method comprising a step of obtaining a silicone rubber-based curable composition by kneading vinyl group-containing organopolysiloxane (A), organohydrogen polysiloxane (B), silica particles (C), a silane coupling agent (D), and a catalyst (E), and a step of forming a silicon rubber by curing the silicone rubber-based curable composition, wherein in the step of obtaining the silicone rubber-based curable composition, the content of the silica particles (C) is in the range of 40 to 84 parts by weight relative to 100 parts by weight as the total amount of the vinyl group-containing organopolysiloxane (A) and the organohydrogen polysiloxane (B).

[13] The method for manufacturing a silicone rubber according to [12], wherein the step of obtaining the silicone rubber-based curable composition comprises kneading a kneaded product of the vinyl group-containing organopolysiloxane (A) and the silane coupling agent (D) with the silica particles (C).

[14] A silicone rubber obtained by curing the silicone rubber-based curable composition according to any one of [1] to [8].

[15] A molded article obtained by curing the silicone rubber-based curable composition according to any one of [1] to [8].

[16] A tube formed of the molded article according to [15].

[Silicone rubber-based curable composition]

In one aspect, the present invention relates to a silicone rubber-based curable composition comprising vinyl group-containing organopolysiloxane (A), organohydrogen polysiloxane (B), and silica particles (C), where the content of the silica particles (C) is 26.0 wt% or more and less than 40.0 wt%, and the composition when cured can form a silicone rubber having a JIS K6253 (2006) type A durometer hardness of 40.0 mN or more (hereinafter, this is recited also as "a silicone rubber-based curable composition of the present invention"). The silicone rubber-based curable composition of the present invention can provide, for example, a silicone rubber with excellent mechanical strength, and preferably, can form a medical tube (i.e., catheter) excellent in kink resistance, scratch resistance and insertability.

The silicone rubber-based curable composition of the present invention includes the vinyl group-containing organopolysiloxane (A), the organohydrogen polysiloxane (B), and the silica particles (C). In the silicone rubber-based curable composition of the present invention, the content of the silica particles (C) is 26.0 wt% or more and less than 40.0 wt%. From the viewpoint of obtaining a silicone rubber that exhibits when cured a physical property of a JIS K 6253 (2006) type A durometer hardness of 40 mN or more, preferably the content of the silica particles (C) is 26.5 wt% or more, or 27.0 wt% or more. Also preferably, it is 39.0 wt% or less, 38.0 wt% or less, 37.0 wt% or less, 36.0 wt% or less, 35.0 wt% or less, 34.0 wt% or less, 33.0 wt% or less, 32.0 wt% or less, 31.0 wt% or less, 30.0 wt% or less, 29.0 wt% or less, or, 28.0 wt% or less. From the similar viewpoint, the content of the silica particles (C) is preferably in the range of 26.0 wt% to 30.0 wt%, more preferably 26.0 wt% to 28.0 wt%, and further preferably 27.0 wt% to 28.0 wt%. The content of the silica particles (C) in the silicone rubber-based curable composition can be calculated on the basis of mass decrease by use of DSC (differential scanning calorimetry)

In the present specification, "JIS K6253 (2006) type A durometer hardness" indicates a type A durometer hardness obtained by a measurement in accordance with JIS K6253 (2006) (hereinafter, it is recited also as "hardness"). The silicone rubber obtained by curing the silicone rubber-based curable composition of the present invention has a hardness of 40.0 mN or more. The hardness is for example 40.2 mN or more, 41 mN or more, 42 mN or more, 43 mN or more, 44 mN or more, or, 45 mN or more. It is for example 55 mN or less, 54 mN or less, 53 mN or less, 52 mN or less, less than 52 mN, 51 mN or less, 50 mN or less, 49 mN or less, or, 48 mN or less. Further, the hardness is for example, in the range of 40 to 55 mN, 40 to 52 mN, 40 mN or more and less than 52 mN, 40 to 51 mN, or, 42 to 51 mN.

The JIS K6253 (2006) type A durometer hardness can be measured on the basis of Examples mentioned below.

The silicone rubber-based curable composition of the present invention can be obtained, for example, by kneading vinyl group-containing organopolysiloxane (A), organohydrogen polysiloxane (B), silica particles (C), a silane coupling agent (D) and a catalyst (E). Therefore, the silicone rubber-based curable composition of the present invention may include vinyl group-containing organopolysiloxane (A), organohydrogen polysiloxane (B), silica particles (C), and furthermore a silane coupling agent (D) and a catalyst (E) and/or water (F).

From the viewpoint of obtaining a silicone rubber exhibiting a physical property of JIS K 6253 (2006) type A durometer hardness of 40. 0 mN or more, it is preferable that the silicone rubber-based curable composition of the present invention is obtained by directly adding the silane coupling agent (D) to the vinyl group-containing organopolysiloxane (A) and to the silica particles (C) and kneading them without treating the silica particles (C) in advance with the silane coupling agent (D).

[Vinyl group-containing organopolysiloxane (A)]

The vinyl group-containing organopolysiloxane (A) is a polymer to make the principal component of the silicone rubber-based curable composition of the present invention, and vinyl group-containing linear organopolysiloxane (A1) is preferred. The vinyl group-containing linear organopolysiloxane (A1) is an organopolysiloxane having a linear chain structure and a vinyl group to make crosslinking points at the time of curing.

The content of the vinyl group in the vinyl group-containing linear organopolysiloxane (A1) is not limited in particular, for example, it is in the range of 0.01 to 15 mol%, and preferably 0.05 to 12 mol% from the viewpoint of forming a sufficient network with the respective components included in the silicone rubber-based curable composition. In this specification, the "content of the vinyl group in the vinyl group-containing linear organopolysiloxane (A1)" indicates mol% of a vinyl group-containing siloxane unit when defining all units constituting the vinyl group-containing linear organopolysiloxane (A1) as 100 mol%. In this regard, one vinyl group-containing siloxane unit is assumed to have one vinyl group.

A polymerization degree of the vinyl group-containing linear organopolysiloxane (A1) is not limited in particular, but from the viewpoint of improving the heat resistance, flame retardance and chemical stability of the silicone rubber, for example it is in the range of 3,000 to 10,000, and preferably 4,000 to 8,000. A specific gravity of the vinyl group-containing linear organopolysiloxane (A1) is not limited in particular, it is in the range of 0.9 to 1.1 for example.

An weight average molecular weight of the vinyl group-containing linear organopolysiloxane (A1) is not limited in particular, but a weight average molecular weight thereof is 500,000 or less for example, preferably 400,000 or less, and more preferably in the range of 200,000 to 350,000. The weight average molecular weight of the vinyl group-containing linear organopolysiloxane (A1) can be measured by using GPC (gel penetration chromatography).

For the above-mentioned vinyl group-containing linear organopolysiloxane (A1), a polysiloxane having a structure represented by the following formula (1) is used preferably.

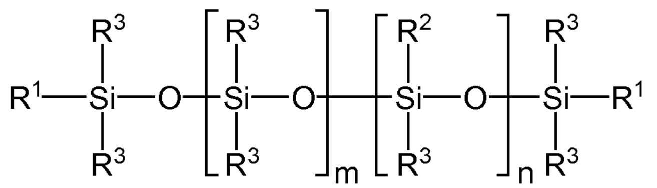

(1)

In the formula (1), each of $R^1$ and $R^2$ is a substituted or unsubstituted alkyl group, alkenyl group or aryl group having a carbon number of 1 to 10, or a hydrocarbon group as a combination thereof; and at least one of the plural $R^1$ and $R^2$ is a vinyl group. The plural $R^1$ are independent from each other, and may be different from each other or may be the same.

Examples of the alkyl group having a carbon number of 1 to 10 include a methyl group, an ethyl group, a propyl group and the like. Among them, a methyl group is preferred. Examples of the alkenyl group having a carbon number of 1 to 10 include a vinyl group, an allyl group, a butenyl group and the like. Among them, a vinyl group is preferred. Examples of the aryl group having a carbon number of 1 to 10 include a phenyl group.

In the formula (1), $R^3$ is a substituted or unsubstituted alkyl group or aryl group having a carbon number of 1 to 8, or a hydrocarbon group as a combination thereof. Examples of the alkyl group having a carbon number of 1 to 8 include a methyl group, an ethyl group, a propyl group and the like. Among them, a methyl group is preferred. Examples of the aryl group having a carbon number of 1 to 8 include a phenyl group. Preferably, $R^3$ is a methyl group. The plural $R^3$ are independent from each other, and they may be different from each other or may be the same.

In the formula (1), each of 'm' and 'n' is the number of repeating units constituting the vinyl group-containing linear organopolysiloxane (A1) represented by the formula (1), 'm' is an integer in the range of 1000 to 10,000, and 'n' is an integer in the range of 0 to 1000. Preferably, 'm' is an integer in the range of 3000 to 10,000, and more preferably

an integer in the range of 3600 to 8000. Preferably, 'n' is an integer in the range of 1 to 1000, and more preferably an integer in the range of 40 to 700.

For the vinyl group-containing linear organopolysiloxane (A1), for example, a polysiloxane having a structure represented by the following formula (1a) is preferred. In the following formula (1a), each of $R^1$ and $R^2$ is independently a methyl group or a vinyl group. At least one of the plural $R^1$ and $R^2$ is a vinyl group, preferably $R^1$ is a methyl group and $R^2$ is a vinyl group.

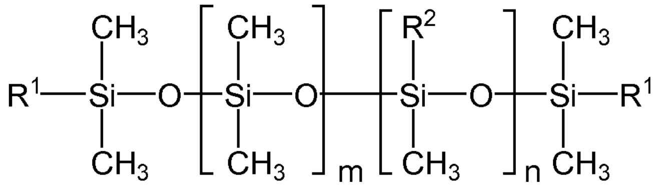

(1a)

For the vinyl group-containing linear organopolysiloxane (A1), from the viewpoint of forming areas having high crosslink densities and areas having low crosslink densities more effectively in a crosslink network of a silicone rubber by unevenly distributing the vinyl groups so as to improve more effectively the tear strength of the silicone rubber, it is preferable to combine and use vinyl group-containing linear organopolysiloxanes different from each other in the vinyl group contents. It is more preferable to combine a first vinyl group-containing linear organopolysiloxane (A1-1) having a typical vinyl group content, and a second vinyl group-containing linear organopolysiloxane (A1-2) having a vinyl group content higher than that of the first vinyl group-containing linear organopolysiloxane (A1-1). The content of the vinyl groups in the first vinyl group-containing linear organopolysiloxane (A1-1) is for example in the range of 0.05 to 0.2 mol%, and preferably 0.1 to 0.15 mol%. The content of the vinyl groups in the second vinyl group-containing linear organopolysiloxane (A1-2) is for example in the range of 0.5 to 12 mol%, preferably 0.8 to 8.0 mol%, and more preferably 0.8 to 4 mol%. Each of the first and second vinyl group-containing linear organopolysiloxanes (A1-1) (A1-2) may be used alone or used in combination of two or more.

Specific examples of the vinyl group-containing linear organopolysiloxane (A1) in the above formula (1a) include a first vinyl group-containing linear organopolysiloxane (A1-1) including 0.05 to 0.2 mol% of a unit whose $R^1$ is a vinyl group and/or whose $R^2$ is a vinyl group; and a second vinyl group-containing linear organopolysiloxane (A1-2) including 0.5 to 12 mol% of a unit whose $R^1$ is a vinyl group and/or whose $R^2$ is a vinyl group.

When combining and blending the first vinyl group-containing linear organopolysiloxane (A1-1) and the second vinyl group-containing linear organopolysiloxane (A1-2), the ratio is not limited in particular, but it is preferably in general (A1-1): (A1-2) =1:0.05 to 1:0.6 (weight ratio), and more preferably 1:0.08 to 1:0.5.

[Organohydrogen polysiloxane (B)]

Organohydrogen polysiloxane (B) is a polymer that undergoes a hydrosilylation-reaction with not only the vinyl groups included in the vinyl group-containing organopolysiloxane (A) but the vinyl groups in the component to be blended in a silicone rubber-based curable composition so as to crosslink these components.

Examples of the organohydrogen polysiloxane (B) to be used include a linear organohydrogen polysiloxane (B1), a branched organohydrogen polysiloxane (B2), and/or a combination of the linear organohydrogen polysiloxane (B1) and the branched organohydrogen polysiloxane (B2).

Regarding each of the linear organohydrogen polysiloxane (B1) and the branched organohydrogen polysiloxane (B2), the amount of the hydrogen atoms (hydride group) to be bonded directly to Si is not limited in particular. From the viewpoint of forming reliably a crosslink network between the vinyl group-containing linear organopolysiloxane (A1) and at least any one of the linear organohydrogen polysiloxane (B1) and the branched organohydrogen polysiloxane (B2), it is preferable in a silicone rubber-based curable composition that the total amount of the hydride groups of the linear organohydrogen polysiloxane (B1) and the branched organohydrogen polysiloxane (B2) is in the range of 0.5 to 5 mol, and preferably 1 to 3.5 mol relative to 1 mol of vinyl groups in the vinyl group-containing linear organopolysiloxane (A1). The amount of hydride groups relative to 1 mol of vinyl groups can be calculated by NMR for example.

[Linear organohydrogen polysiloxane (B1)]

Linear organohydrogen polysiloxane (B1) has a linear chain structure and a structure where hydrogen is bonded directly to Si (≡Si-H). Though there is no particular limitation on the molecular weight of the linear organohydrogen polysiloxane (B1), the weight average molecular weight is preferably not more than 20000 or less, more preferably in the range of 500 to 10000, and further preferably 800 to 7000. The weight average molecular weight of the linear

organohydrogen polysiloxane (B1) can be measured by GPC (gel permeation chromatography).

From the viewpoint of preventing progression of a crosslink reaction in the molecules of the linear organohydrogen polysiloxane (B1), it is preferable that the linear organohydrogen polysiloxane (B1) has no vinyl group.

It is preferable in the linear organohydrogen polysiloxane (B1) that the number of alkyl groups R to be bonded to Si (R/Si) is in the range of 1.8 to 2.1 in a case where the number of Si is 1.

It is preferable that the linear organohydrogen polysiloxane (B1) has a structure represented by the following formula (2).

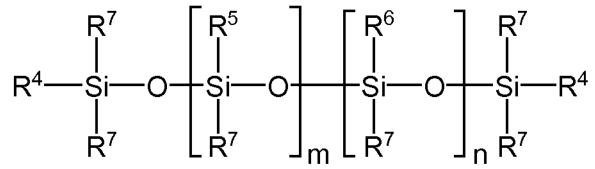

(2)

In the formula (2), each of $R^4$, $R^5$ and $R^6$ is independently substituted or unsubstituted alkyl group, alkenyl group, and aryl group having a carbon number of 1 to 10, a hydrocarbon group as a combination thereof, or a hydride group. Examples of the alkyl group having a carbon number of 1 to 10 include a methyl group, an ethyl group, a propyl group and the like. Among them, a methyl group is preferred. Examples of the alkenyl group having a carbon number of 1 to 10 include an allyl group, a butenyl group and the like. Examples of the aryl group having a carbon number of 1 to 10 include a phenyl group. The plural $R^4$ are independent from each other, and may be different from each other or may be the same. At least one of the plural $R^4$, $R^5$ and $R^6$ is a hydride group. Preferably at least one of $R^5$ and $R^6$ is a hydride group, and more preferably, either $R^5$ or $R^6$ is a hydride group. It is particularly preferable that $R^4$ and $R^5$ are methyl groups and $R^6$ is a hydride group; or that $R^4$ and $R^6$ are methyl groups and $R^5$ is a hydride group.

In the formula (2), $R^7$ is a substituted or unsubstituted alkyl group or aryl group having a carbon number of 1 to 8, or a hydrocarbon group as a combination thereof. Examples of the alkyl group having a carbon number of 1 to 8 include a methyl group, an ethyl group, a propyl group and the like. Among them, a methyl group is preferred. Examples of the aryl group having a carbon number of 1 to 8 include a phenyl group. The plural $R^7$ are independent from each other, and may be different from each other or may be the same. It is particularly preferable that $R^7$ is a methyl group.

In the formula (2), each of 'm' and 'n' is the number of repeating units constituting the linear organohydrogen polysiloxane (B1) represented by the formula (2), 'm' is an integer in the range of 0 to 300, 'n' is an integer in the range of 0 to 300, and m + n = 2 to 300. Preferably, 'm' is an integer in the range of 0 to 100, more preferably an integer in the range of 0 to 50, and further preferably an integer in the range of 0 to 42. Preferably, 'n' is an integer in the range of 0 to 100, more preferably an integer in the range of 0 to 50, and further preferably an integer in the range of 0 to 42. Preferably, m + n is an integer in the range of 2 to 100, more preferably an integer in the range of 5 to 50, and further preferably an integer in the range of 8 to 42.

The linear organohydrogen polysiloxane (B1) may be used alone or used in combination of two or more.

[Branched organohydrogen polysiloxane (B2)]

Branched organohydrogen polysiloxane (B2) has a branched structure and a structure where hydrogen is bonded directly to Si (≡Si-H). The specific gravity of the branched organohydrogen polysiloxane (B2) is in the range of 0.9 to 0.95 for example.

From the viewpoint of preventing progression of a crosslink reaction in the molecules of the branched organohydrogen polysiloxane (B2), it is preferable that the branched organohydrogen polysiloxane (B2) has no vinyl group.

It is preferable in the branched organohydrogen polysiloxane (B2) that the number of alkyl groups R to be bonded to Si (R/Si) is in the range of 0.8 to 1.7 in a case where the number of Si is 1.

A branched organohydrogen polysiloxane (B2) is preferably represented by the following average composition formula (c):

Average composition formula (c): $(H_a(R^8)_{3-a}SiO_{1/2})_m(SiO_{4/2})_n$

In the formula (c), $R^8$ is a univalent organic group, preferably a substituted or unsubstituted alkyl group or aryl group having a carbon number of 1 to 10, or a hydrocarbon group as a combination thereof. Examples of the alkyl group having a carbon number of 1 to 10 include a methyl group, an ethyl group, a propyl group and the like. Among them, a methyl group is preferred. Examples of the aryl group having a carbon number of 1 to 10 include a phenyl group. In the formula (c), 'a' is the number of the hydride groups (hydrogen atom directly bonded to Si), and it is an integer in the range of 1 to 3, preferably 1. In the formula (c), 'm' is the number of "$H_a(R^8)_{3-a}SiO_{1/2}$" units, and 'n'is the number of

"$SiO_{4/2}$" units.

It is preferable that the branched organohydrogen polysiloxane (B2) has a structure represented by the following formula (3) and also a structure represented by the following formula (4).

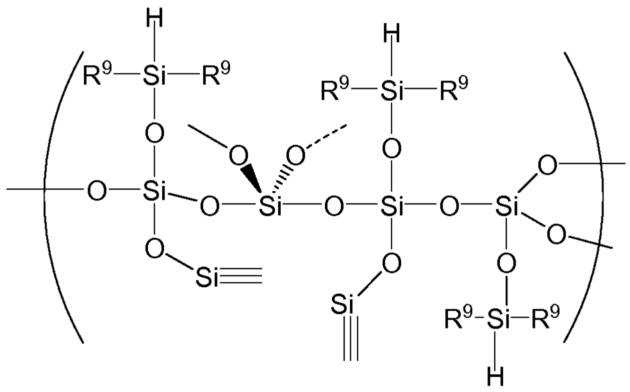

(3)

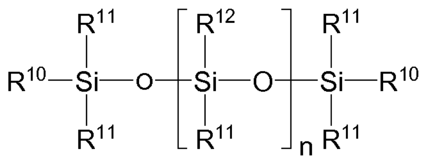

(4)

In the formula (3), $R^9$ is a substituted or unsubstituted alkyl group or aryl group having a carbon number of 1 to 8, or a hydrocarbon group as a combination thereof, or a hydrogen atom. Examples of the alkyl group having a carbon number of 1 to 8 include a methyl group, an ethyl group, a propyl group and the like. Among them, a methyl group is preferred. Examples of the aryl group having a carbon number of 1 to 8 include a phenyl group. The plural $R^9$ are independent from each other, and may be different from each other or may be the same. Preferably $R^9$ is a methyl group for example. In the formula (3), "-O-Si≡" represents that Si has a branched structure expanding three-dimensionally

In the formula (4), each of $R^{10}$ and $R^{11}$ is a substituted or unsubstituted alkyl group, alkenyl group or aryl group having a carbon number of 1 to 10, or a hydrocarbon group as a combination thereof, or a hydride group. At least two of the plural $R^{10}$ and $R^{11}$ are hydride groups. Examples of the alkyl group having a carbon number of 1 to 10 include a methyl group, an ethyl group, a propyl group and the like. Among them, a methyl group is preferred. Examples of the alkenyl group having a carbon number of 1 to 10 include an allyl group, a butenyl group and the like. Examples of the aryl group having the carbon number of 1 to 10 include a phenyl group. The plural $R^{10}$ and $R^{11}$ are independent from each other, and they may be different from each other or may be the same. In the formula (4), $R^{12}$ is a substituted or unsubstituted silanol group.

The branched organohydrogen polysiloxane (B2) may be used alone or used in combination of two or more.

The linear organohydrogen polysiloxane (B1) makes the principal component of the silicone rubber-based curable composition. The branched organohydrogen polysiloxane (B2) having a branched structure forms areas having high crosslink densities, thereby it may contribute considerably to formation of a structure with different crosslink densities in the silicone rubber system. Thereby, from the viewpoint of forming areas having high crosslink densities in the silicone rubber, the linear organohydrogen polysiloxane (B1) and the branched organohydrogen polysiloxane (B2) may be used in combination. In such a case, the ratio of (B1) to (B2) is preferably: (B1):(B2) =1:0.1 to 1:1 (weight ratio), and more preferably it is set to the range of 1:0.2 to 1:0.5.

The content of the organohydrogen polysiloxane (B) is not limited in particular, but it is for example in the range of 0.1 to 15 parts by weight, and preferably 0.4 to 6 parts by weight relative to 100 parts by weight of vinyl group containing-organopolysiloxane (A).

[Silica particles]

The silica particles (C) are a component to be added for the purpose of improving the hardness and the mechanical strength of the obtained silicone rubber, and in particular, improving the tensile strength. As mentioned above, in the silicone rubber-based curable composition of the present invention, the content of the silica particles (C) is 26.0 wt% or more and less than 40.0 wt%. From the viewpoint of obtaining a silicone rubber that exhibits when cured a physical property of JIS K6253 (2006) type A durometer hardness of 40.0 mN or more, the content of the silica particles (C) is preferably 26.5 wt% or more, or 27.0 wt% or more. Preferably it is 39.0 wt% or less, 38.0 wt% or less, 37.0 wt%

or less, 36.0 wt% or less, 35.0 wt% or less, 34.0 wt% or less, 33.0 wt% or less, 32.0 wt% or less, 31.0 wt% or less, 30.0 wt% or less, 29.0 wt% or less, or, 28.0 wt% or less. From the similar viewpoint, the content of silica particles (C) is preferably in the range of 26.0 wt% to 30.0 wt%, more preferably 26.0 wt% to 28.0 wt%, and further preferably 27.0 wt% to 28.0 wt%. The content of the silica particles in the silicone rubber-based curable composition can be calculated from the mass decrease by use of DSC (differential scanning calorimetry).

Though there is no particular limitation, examples of the silica particles (C) include fumed silica, baked silica, precipitated silica and the like. The each type of the silica particles (C) may be used alone or used in combination of two or more.

From the viewpoint of improving the hardness and the mechanical strength of the obtained silicone rubber, the silica particles (C) has preferably a specific gravity in the range of 50 to 400 $m^2/g$, and more preferably 100 to 400 $m^2/g$. From the similar viewpoint, the average particle diameter is preferably in the range of 1 to 100 nm, and more preferably about 5 to about 20 nm.

[Silane coupling agent (D)]

From the viewpoint of improving the hardness and the mechanical strength of the obtained silicone rubber, preferably the silane coupling agent (D) has a hydrolyzable group. The hydrolyzable group is hydrolyzed by water thereby becoming a hydroxyl group, and the hydroxyl group undergoes a dehydrative condensation reaction with a hydroxyl group on the surface of the silica particles (C) so as to carry out the surface modification of the silica particles (C), and thus, the hardness and mechanical strength of the thus obtained silicone rubber are improved.

From the similar viewpoint, a silane coupling agent having a hydrophobic group is preferred. It is assumed that, since the hydrophobic group is imparted to the surface of the silica particles (C), the cohesion force of the silica particles (C) is degraded (aggregation caused by the hydrogen bond by the silanol group is reduced) in the silicone rubber-based curable composition and thus in the silicone rubber, and as a result, the dispersibility of the silica particles in the composition is improved. Thereby, the interface between the silica particles and the rubber matrix is increased to enhance the reinforcing effect of the silica particles. In addition to that, it is assumed that, when matrix modification of the rubber is carried out, the slipperiness of the silica particles in the matrix is improved. And, due to the improvement of the dispersibility of the silica particles and the improvement of the slipperiness, the mechanical strength (for example, tensile strength and tear strength) of the silicone rubber due to the silica particles is improved.

From the similar viewpoint, the silane coupling agent (D) preferably has a vinyl group. Accordingly, the vinyl group is introduced onto the surface of the silica particles (C). As a result, when the silicone rubber-based curable composition is cured, that is, when a vinyl group contained in the vinyl group-containing organopolysiloxane (A) and a hydride group contained in the organohydrogen polysiloxane (B) undergo a hydrosilylation reaction, thereby forming a network (crosslinked structure). At that time, since the vinyl group in the silica particles (C) also relate to the hydrosilylation reaction with the hydride group in the organohydrogen polysiloxane (B), the silica particles (C) also are captured in the network. Thus, a high hardness and a high modulus of the silicone rubber thus formed are promoted.

Examples of the silane coupling agent (D) include those represented by the following formula (4).

$$Y_n\text{-Si-}(OR)_{4-n} \qquad (4)$$

In the formula (4), 'n' represents an integer in the range of 1 to 3. 'Y' represents any functional group having a hydrophobic group, a hydrophilic group or a vinyl group. When 'n' is 1, 'Y' is a hydrophobic group, and when 'n' is 2 or 3, at least one of Y is a hydrophobic group. 'OR' represents a hydrolyzable group.

Examples of the hydrophobic group include an alkyl group or aryl group having a carbon number of 1 to 6, or a hydrocarbon group formed as a combination thereof, and the like. The examples include a methyl group, an ethyl group, a propyl group, a phenyl group and the like. Among them, a methyl group is preferred in particular. Examples of the hydrophilic group include a hydroxyl group, a sulfonic acid group, a carboxyl group, a carbonyl group and the like. Among them, a hydroxyl group is preferred in particular. The hydrophilic group may be contained as a functional group, but is preferably not contained from the viewpoint of imparting hydrophobicity to the silane coupling agent (D).

Examples of the hydrolyzable group include alkoxy groups such as a methoxy group and an ethoxy group, a chloro group, a silazane group and the like. Among them, the silazane group is preferred from the viewpoint of high reactivity with the silica particles (C). When the hydrolyzable group is a silazane group, the silane coupling agent (D) has two structures of ($Y_n$-Si-) in the formula (4) above, from its structural characteristics.

Specific examples of the silane coupling agent (D) represented by the formula (4) include those having a hydrophobic group as a functional group, for example, alkoxysilanes such as methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, and decyltrimethoxysilane; chlorosilanes such as methyltrichlorosilane, dimethyldichlorosilane, trimethylchlorosilane, and phenyltrichlorosilane; and hexamethyldisilazane; and, those having a vinyl group as a functional group, for example, alkoxysilanes such as methacryloxypropyltriethoxysilane, methacryloxypropyltrimethoxysilane, methacryloxypropylmethyldiethoxysilane, methacryloxypropylmethyldimethoxysilane, vinyltriethoxysilane, vinyltrimethoxysilane, and vinylmethyldimethoxysilane; chlorosilanes such as vinyltrichlorosilane, and vinylmethyldichlorosilane; and divinyltetramethyldisilazane. Among them, in consideration of the description above, hexamethyldisilazane is preferred particularly as the silane coupling agent (D) having a hydrophobic group; and divinyltetramethyldisilazane is preferred as the silane coupling agent (D) having a vinyl group.

From the viewpoint of improving the dispersibility of the silica particles (C) in the silicone rubber-based curable composition, the amount of the silane coupling agent (D) is preferably in the range of 5 to 100 parts by weight, and more preferably 10 to 40 parts by weight relative to 100 parts by weight of the silica particles (C). Thereby, the dispersibility of the silica particles (C) in the silicone rubber-based curable composition can be improved reliably.

[Catalyst (E)]

Examples of the catalyst (E) include platinum or a platinum compound, and the like. Any known material or product can be employed for the platinum or platinum compound. Examples thereof include platinum black; platinum supported on silica, carbon black, or the like; chloroplatinic acid or an alcohol solution of chloroplatinic acid; a complex salt of chloroplatinic acid with an olefin; a complex salt of chloroplatinic acid with vinyl siloxane, and the like. The catalyst (E) may be used alone or may be used in combination of two or more.

The content of the catalyst (E) indicates an amount of catalyst, and it can be determined appropriately. However, from the viewpoint of improving reactivity between the vinyl group-containing organopolysiloxane (A) and the organohydrogen polysiloxane (B), the content is preferably in the range of 0.01 to 5 parts by weight, and more preferably 0.02 to 0.2 parts by weight relative to 100 parts by weight of the total amount of (A) and (B).

[Water (F)]

Water (F) is a component that functions as a dispersion medium for dispersing the respective components included in the silicone rubber-based curable composition and contributes to the reaction of the silica particles (C) with the silane coupling agent (D).

Although the content of water (F) can be determined appropriately, the content is preferably in the range of 10 to 100 parts by weight, and more preferably 30 to 70 parts by weight relative to 100 parts by weight of the silane coupling agent (D) from the viewpoint of improving the reactivity between the silane coupling agent (D) and the silica particles (C).

The silicone rubber-based curable composition of the present invention may include known components to be blended in the silicone rubber-based curable composition, in addition to the components (A) to (F). Examples of the known components include diatomaceous earth, iron oxide, zinc oxide, titanium oxide, barium oxide, magnesium oxide, cerium oxide, calcium carbonate, magnesium carbonate, zinc carbonate, glass wool, and mica. In addition, a dispersing agent, a pigment, a dye, an antistatic agent, an antioxidant, a flame retardant, a thermal conductivity enhancing agent or the like may be blended appropriately.

According to the silicone rubber-based curable composition of the present invention, for example, a silicone rubber whose JIS K6252 (2007) nicked crescent tear strength is 39.0 N/mm or more when cured is obtained. The tear strength is for example, 40.0 N/mm or more, 41.0 N/mm or more, 42.0 N/mm or more, 43.0 N/mm or more, 44.0 mm/N or more, 45.0 mm/N or more, or, 46.0 mm/N or more. Further for example, it is 55.0 N/mm or less, 54.0 N/mm or less, 53.0 N/mm or less, or 52.0 N/mm or less. Therefore, the tear strength is for example in the range of: 39.0 to 55.0 N/mm, 39.0 to 54.0 N/mm, 39.0 to 53.0 N/mm, 39.0 to 52.0N/mm, or, 40.0 to 52.0 N/mm. Further, from the viewpoint of exhibition of high tear strength and excellent stretch, the nicked crescent tear strength is preferably in the range of 39.0 to 55.0 N/mm, and more preferably 40.0 to 52.0 N/mm. The JIS K6252 (2007) nicked crescent tear strength can be measured with reference to the below-mentioned Examples.

According to the silicone rubber-based curable composition of the present invention, for example, a silicone rubber whose stretch at break is 1200% or more can be obtained. The stretch at break is preferably for example, 1200% or more, 1300% or more, 1400% or more, 1500% or more, 1600% or more, or, 1700% or more. For example, it is 2500% or less, 2400% or less, 2300% or less, or 2200% or less. Therefore, the stretch at break is for example, in the range of 1200 to 2500%, 1200 to 2400%, 1200 to 2300%, or, 1200 to 2200%. In light of exhibiting a high tear strength and excellent stretch, the stretch at break is preferably in the range of 1200 to 2300%, and more preferably 1200 to 2200%. The stretch at break can be measured for example with reference to Examples.

[Method for manufacturing silicone rubber-based curable composition]

In another aspect, the present invention relates to a method for manufacturing a silicone rubber-based curable composition, including a step of obtaining a kneaded product by kneading vinyl group-containing organopolysiloxane

(A), organohydrogen polysiloxane (B), silica particles (C), a silane coupling agent (D) and a catalyst (E). In the step, the content of the silica particles (C) in the kneaded product is in the range of 40 to 84 parts by weight relative to 100 parts by weight as the total amount of the vinyl group-containing organopolysiloxane (A) and the organohydrogen polysiloxane (B) (hereinafter, which is described also as "method for manufacturing a silicone rubber-based curable composition of the present invention"). According to the method for manufacturing a silicone rubber-based curable composition of the present invention, a silicone rubber-based curable composition of the present invention that exhibits a physical property of JIS K6253 (2006) type A durometer hardness is 40.0 mN or more when cured can be manufactured.

In the method for manufacturing a silicone rubber-based curable composition of the present invention, from the viewpoint of obtaining a silicone rubber that exhibits when cured a physical property of JIS K6253 (2006) type A durometer hardness of 40.0 mN or more, the content of the silica particles (C) is in the range of 40 to 84 parts by weight relative to 100 parts by weight as the total amount (A) and (B). The content of silica particles (C) is preferably 41 parts by weight or more, or 42 parts by weight or more. Further, it is preferably 80 parts by weight or less, 60 parts by weight or less, 55 parts by weight or less, 53 parts by weight or less, 52 parts by weight or less, 51 parts by weight or less, 50 parts by weight or less, 49 parts by weight or less, 48 parts by weight or less, 47 parts by weight or less, or, 46 parts by weight or less. The content of the silica particles (C) is preferably in the range of 40 to 53 parts by weight, more preferably 41 to 50 parts by weight, further preferably 41 to 49 parts by weight, and even further preferably 41 to 47 parts by weight.

In the method for manufacturing a silicone rubber-based curable composition of the present invention, from the viewpoint of obtaining a silicone rubber that exhibits when cured a physical property of JIS K6253 (2006) type A durometer hardness of 40.0 mN or more, it is preferable that kneading is carried out by an integral blending method in which the silane coupling agent (D) is added directly to the vinyl group-containing organopolysiloxane (A) as the resin component and the silica particles (C) as the filler. From the similar viewpoint, it is preferable that the method for manufacturing a silicone rubber-based curable composition of the present invention does not include a step of treating in advance the silane particles (C) with the silane coupling agent (D).

It is preferable that the method for manufacturing a silicone rubber-based curable composition of the present invention includes a step (1) of kneading a vinyl group-containing organopolysiloxane (A), silica particles (C), and a silane coupling agent (D); and a step (2) of kneading a kneaded product obtained in the step (1), an organohydrogen polysiloxane (B), and a catalyst (E).

Hereinafter, an example of a method for manufacturing a silicone rubber-based curable composition of the present invention will be described.

Step (1)

First, a vinyl group-containing organopolysiloxane (A), silica particles (C), and a silane coupling agent (D) are kneaded to obtain a kneaded product (1) containing these respective components (A), (C) and (D).

From the viewpoint of further improving the dispersibility of the silica particles (C) in the vinyl group-containing organopolysiloxane (A), it is preferable to knead the vinyl group-containing organopolysiloxane (A) and the silane coupling agent (D) in advance and further kneading (mixing) with the silica particles (C). From the viewpoint of improving the reactivity between the silane coupling agent (D) and the silica particles (C), water (F) may be added, if necessary, to the respective components (A), (C) and/or (D) before kneading the components.

It is preferable that the respective components (A), (C) and (D) are kneaded through a first step of heating at a first temperature and a second step of heating at a second temperature. Thereby, it is possible to subject the surface of the silica particles (C) to a surface treatment with the silane coupling agent (D) in the first step and to remove reliably a by-product generated due to the reaction between the silica particles (C) and the silane coupling agent (D) from the kneaded product in the second step.

From the viewpoint of carrying out efficiently the surface treatment of the silica particles (C) with the silane coupling agent (D), the condition for heating in the first step (first temperature) is preferably in the range of 40 to 120°C, and more preferably 60 to 90°C. From the similar viewpoint, the atmosphere in the first step is preferably an inert atmosphere such as a nitrogen atmosphere, for example. From the similar viewpoint, the time of the first step is preferably in the range of 0.3 to 1.5 hours, and more preferably 0.5 to 1.2 hours.

From the viewpoint of removing efficiently the by-product generated in the reaction between the silica particles (C) and the silane coupling agent (D), the condition for heating in the second step (second temperature) is preferably in the range of 130 to 210°C, and more preferably 160 to 180°C. From the similar viewpoint, the atmosphere in the second step is preferably a reduced-pressure atmosphere. From the similar viewpoint, the time of the second step is preferably in the range of 0.7 to 3.0 hours, and more preferably 1.0 to 2.0 hours.

Step (2)

Next, the kneaded product (1) obtained in the step (1), organohydrogen polysiloxane (B) and a catalyst (E) are

kneaded. Thereby, a silicone rubber-based curable composition is obtained.

With regard to the kneading of the kneaded product (1) with the organohydrogen polysiloxane (B) and the catalyst (E), from the viewpoint of improving the dispersion of the respective components (A) to (E) while suppressing the progression of the reaction between the vinyl group-containing organopolysiloxane (A) and the organohydrogen polysiloxane (B), preferably a part of the kneaded product (1) is kneaded with the organohydrogen polysiloxane (B), while the rest of the kneaded product (1) is kneaded with the catalyst (E), and then the respective kneaded products are kneaded.

In the kneading of the components (B) and (E), from the viewpoint of preventing or suppressing the progression of the reaction between the vinyl group-containing organopolysiloxane (A) and the organohydrogen polysiloxane (B), the temperature for kneading is preferably in the range of 10 to 70°C, and more preferably 25 to 30°C for a case of roll setting temperature. From the viewpoint of improving the dispersibility of the respective components (A) to (E), the time for kneading is 5 minutes to 1 hour, and more preferably 10 to 40 minutes.

In the step (2), even if the temperature of the kneaded product is determined to be relatively high, from the viewpoint of preventing or suppressing the progression of the reaction between the vinyl group-containing organopolysiloxane (A) and the organohydrogen polysiloxane (B), a reaction inhibitor such as 1-ethynyl cyclohexanol may be added to the kneaded product.

The kneading in the steps (1) and (2) can be carried out with an arbitrary kneading machine. In this regard, the kneading machine is not limited particularly, and, a kneader, a biaxial roll, a Banbury mixer (continuation kneader), a pressurization kneader or the like can be used.

By curing the thus obtained silicone rubber-based curable composition of the present invention, a silicone rubber can be obtained. The silicone rubber obtained by curing the silicone rubber-based curable composition of the present invention exhibits a physical property of JIS K6253 (2006) type A durometer hardness of 40.0 mN or more. Further, the silicone rubber obtained by curing the silicone rubber-based curable composition of the present invention has for example a JIS K6252 (2007) nicked crescent tear strength of 39.0 N/mm or more, and/or a stretch at break of 1200% or more.

Curing of the silicone rubber-based curable composition can be carried out for example by heating at a temperature of 140 to 180°C for 5 to 15 minutes (primary curing) and then by post-baking (secondary curing) at 200°C for 4 hours.

[Method for manufacturing silicone rubber]

Namely, in a still further aspect, the present invention relates to a method for manufacturing a silicone rubber, including: a step of obtaining a silicone rubber-based curable composition by kneading vinyl group-containing organopolysiloxane (A), organohydrogen polysiloxane (B), silica particles (C), a silane coupling agent (D) and a catalyst (E); and a step of forming a silicone rubber by curing the silicone rubber-based curable composition. In the step of obtaining the silicone rubber-based curable composition, the content of the silica particles (C) is in the range of 40 to 84 parts by weight relative to 100 parts by weight as the total amount of the vinyl group-containing organopolysiloxane (A) and the organohydrogen polysiloxane (B) (hereinafter, which is described also as a "method for manufacturing a silicone rubber of the present invention"). In the method for manufacturing a silicone rubber of the present invention, the step of obtaining the silicone rubber-based curable composition can be carried out similarly to the method for manufacturing a silicone rubber-based curable composition of the present invention.

According to the method for manufacturing a silicone rubber of the present invention, a silicone rubber having a JIS K6253 (2006) type A durometer hardness of 40.0 mN or more can be obtained.

[Silicone rubber]

In a still another aspect, the present invention relates to a silicone rubber obtained by curing a silicone rubber-based curable composition of the present invention. Furthermore, in a still another aspect, the present invention relates to a silicone rubber having a JIS K6253 (2006) type A durometer hardness of 40.0 mN or more. Since the silicone rubber of the present invention exhibits for example excellent mechanical strength, it can make a tube for medical use (for example, catheter) made from a silicone rubber, having excellent kink resistance, scratch resistance, and insertability.

The silicone rubber of the present invention includes for example vinyl group-containing organopolysiloxane (A), organohydrogen polysiloxane (B), and silica particles (C).

In the silicone rubber of the present invention, the JIS K6253 (2006) type A durometer hardness is 40.0 mN or more. The hardness is, for example, 40.2 mN or more, 41 mN or more, 42 mN or more, 43 mN or more, 44 mN or more, or, 45 mN or more. It is for example 55 mN or less, 54 mN or less, 53 mN or less, 52 mN or less, 51 mN or less, 50 mN or less, 49 mN or less, or, 48 mN or less. Further, the hardness is for example, in the range of 40 to 55 mN, 40 to 52 mN, or 42 to 51 mN. The JIS K6253 (2006) type A durometer hardness can be measured in accordance with the below-mentioned Examples.

In the silicone rubber of the present invention, for example, the JIS K6252 (2007) nicked crescent tear strength is 39.0 N/mm or more. The tear strength is for example, 40.0 N/mm or more, 41.0 N/mm or more, 42.0 N/mm or more, 43.0 N/mm or more, 44.0 mm/N or more, 45.0 mm/N or more, or, 46.0 mm/N or more. Further for example, it is 55.0 N/mm or less, 54.0 N/mm or less, 53.0 N/mm or less, or, 52.0 N/mm or less. Therefore, the tear strength is for example in the range of: 39.0 to 55.0 N/mm, 39.0 to 54.0 N/mm, 39.0 to 53.0 N/mm, 39.0 to 52.0N/mm, or, 40.0 to 52.0 N/mm. Further, in light of exhibiting a high tear strength and excellent stretch, the tear strength of the silicone rubber is preferably in the range of 39.0 to 55.0 N/mm, and more preferably 40.0 to 52.0 N/mm. The JIS K6252 (2007) nicked crescent tear strength can be measured in accordance with the below-mentioned Examples.

According to the silicone rubber of the present invention, for example, a silicone rubber whose stretch at break is 1200% or more can be obtained. The stretch at break is preferably for example, 1200% or more, 1300% or more, 1400% or more, 1500% or more, 1600% or more, or, 1700% or more. Preferably it is for example 2500% or less, 2400% or less, 2300% or less, or 2200% or less. Therefore, the stretch at break is for example, in the range of 1200 to 2500%, 1200 to 2400%, 1200 to 2300%, or, 1200 to 2200%. In light of exhibiting a high tear strength and excellent stretch, the stretch at break of the silicone rubber is preferably in the range of 1200 to 2300%, and more preferably 1200 to 2200%. The stretch at break can be measured for example in accordance with Examples.

By using the above-mentioned silicone rubber, a molded article with excellent mechanical strength can be obtained. Therefore, in still another aspect, the present invention relates to a molded article obtained by curing the silicone rubber-based curable composition of the present invention. By using the molded article, a medical tube (i.e., catheter) made of silicone rubber excellent in kink resistance, scratch resistance and insertability can be obtained.

Examples

Hereinafter, the present invention will be described in more detail by way of Examples and Comparative Examples. However, the present invention is not limited to the following examples.

[Raw materials]

Examples of raw materials used in Examples are described below.

(A) Vinyl group-containing organopolysiloxane

(A1) Vinyl group-containing linear organopolysiloxane

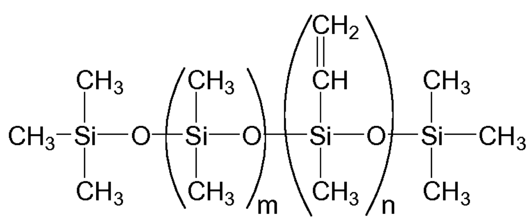

First vinyl group-containing linear organopolysiloxane (A1-1): low vinyl TSE-201 (trade name, supplied by Momentive Performance Materials Japan LLC, vinyl group: 0.13 mol%, Mn = $3.3 \times 10^5$)
Second vinyl group-containing linear organopolysiloxane (A1-2): high vinyl XE25-511 (trade name, supplied by Momentive Performance Materials Japan LLC, vinyl group: 0.93 mol%, Mn = $2.3 \times 10^5$)

(B) Organohydrogen polysiloxane

(B1) Linear organohydrogen polysiloxane

88466 (trade name, Momentive Performance Materials Japan LLC, polydimethyl-co-methylhydride siloxane, m = 14, n = 11)

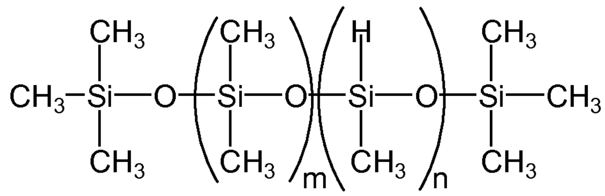

HMS-082 (trade name, supplied by Gelest, Inc.,

Methylhydrosiloxane-dimethysiloxane copolymers, Trimethylsiloxy terminated, weight average molecular weight: 5500-6500, MeHSiO: 7-8 mole%, m = 39, n = 3)

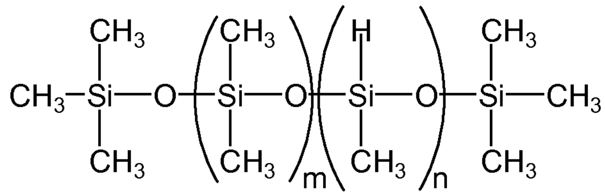

HMS-501 (trade name, supplied by Gelest, Inc.,

Methylhydrosiloxane-dimethysiloxane copolymers, Trimethylsiloxy terminated, weight average molecular weight: 900-1200, MeHSiO: 50-55 mole%, m = 4, n = 4)

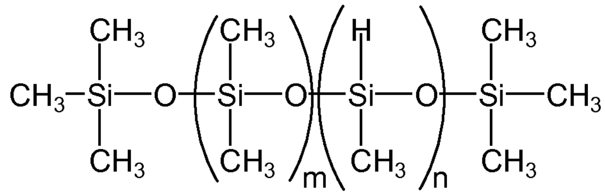

(B2) Branched organohydrogen polysiloxane

HQM-107 (trade name, supplied by Gelest, Inc., Hydride Q Resin)

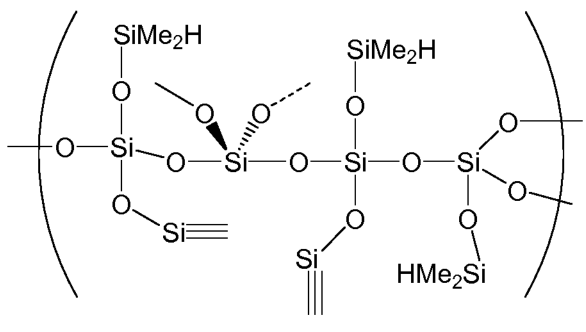

(C) Silica particles

Silica dioxide (trade name: AEROSIL300, supplied by NipponAerosil Co., Ltd., surface preparation: $-SiMe_3$ ($-CH=CH_2$ optional), filter specific surface: 300 $mm^2/g$)

(D) Silane coupling agent

Hexamethyldisilazane (HMDZ) (trade name: HEXAMETHYLDISILAZANE (SIH6110.1) supplied by Gelest, Inc.)

(E) Catalyst

Platinum compound (trade name: PLATINUM

DIVINYLTETRAMETHYLDISILOXANE COMPLEX in xylene (SIP6831.2) supplied by Gelest, Inc.)

[Preparation of silicone rubber-based curable composition]

Silicone rubber-based curable compositions in Examples 1-4 and Comparative Examples 1 and 2 in Table 1 below were manufactured. First, (A1) a vinyl group-containing linear organopolysiloxane, (A2) a vinyl group-containing branched organopolysiloxane, (D) silane coupling agent and (F) water were kneaded, then (C) silica particles were added thereto. This was further kneaded for 1 hour under a condition of 60 to 90°C in a nitrogen atmosphere so as to cause a coupling reaction. Next, it was kneaded for 2 hours under a condition of 160 to 180°C in a reduced-pressure atmosphere so as to remove a by-product (ammonia), thereby a kneaded product (silicone rubber compound) was obtained. The resulting kneaded product was cooled to room temperature. To the kneaded product cooled to room temperature, (B1) linear organohydrogen polysiloxane and/or (B2) branched organohydrogen polysiloxane and (E) a catalyst were added, and the mixture was kneaded with a roll so as to obtain a silicone rubber-based curable composition.

Table 1 below shows the contents of (A1) vinyl group-containing linear organopolysiloxane, (A2) vinyl group-containing branched organopolysiloxane, (B1) linear organohydrogen polysiloxane, (B2) branched organohydrogen polysiloxane, (C) silica particles, (D) silane coupling agent, (E) catalyst and (F) water. The content of (C) silica particles in Examples 1-4 was set in the range of 27 to 28 wt%, and the content of (C) silica particles in Comparative Examples 1 and 2 was set to 23.1 wt%. For the (B1) linear organohydrogen polysiloxane and (B2) branched organohydrogen polysiloxane, materials shown in Table 2 below were used. The "Si-H/vinyl" in Table 1 was calculated by the equation below, on the basis of addition amount (mmol) of organohydrogen polysiloxane (B) as a hydride crosslinking agent and the amount (mmol) of the vinyl group-containing organopolysiloxane (A) (total amount of the high vinyl and the low vinyl).

$$\text{Si-H/vinyl} = [\text{organohydrogen polysiloxane (B) (mmol)}]/[\text{vinyl group-containing organopolysiloxane (A) (mmol)}]$$

In Example 5, a silicone rubber-based curable composition was obtained in the same manner as mentioned in the above Examples except that (A1) vinyl group-containing linear organopolysiloxane (vinyl group content: 0.13 mol%) and (A2) vinyl group-containing branched organopolysiloxane (vinyl group content: 0.93 mol%) were used as the (A) vinyl group-containing organopolysiloxane, and hexamethyldisilazane (HMDZ) supplied by Gelest Inc., "HEXAMETHYLDISILAZANE (SIH6110.1)" and divinyltetramethyldisilazane "1,3-DIVINYLTETRAMETHYLDISILAZANE (SID4612.0)" supplied by Gelest Inc. were used as the (D) silane coupling agent; and the contents of the respective components were set as illustrated in Table 1 below. The content of silica particles in Example 5 was 30.1 wt%.

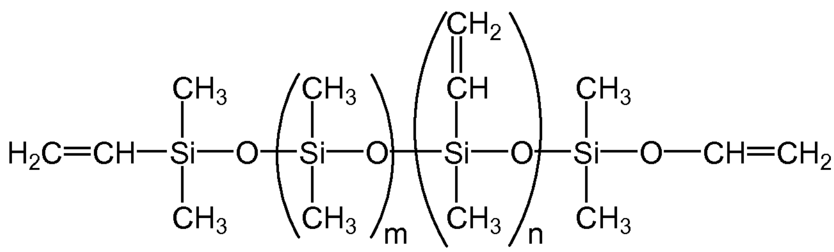

| (Table 1) | | | Examples | | | | | Comparative Examples | |
|---|---|---|---|---|---|---|---|---|---|
| | | | 1 | 2 | 3 | 4 | 5 | 1 | 2 |
| Composition [parts by weight] | (A)Vinyl group-containing organopolysiloxane | (A1-1) Low vinyl | 80 | 80 | 80 | 80 | 80 | 80 | 80 |
| | | (A1-2) High vinyl | 20 | 20 | 20 | 20 | 20 | 20 | 20 |
| | (B)Organohydrogen polysiloxane | (B1) Linear | 5.27 | 0.77 | 2.39 | 0.5 | 0.35 | 0.42 | 0.525 |
| | | (B2) Branched | - | - | 0.45 | - | 0.12 | - | - |
| | (D) Silane coupling agent | | 10.5 | 10.5 | 10.5 | 10.5 | 10.5 | 10.5 | 10.5 |
| | (E) Catalyst | | 0.1 | 0.1 | 0.1 | 0.1 | 0.05 | 0.05 | 0.05 |
| | (F) Water | | 5.25 | 5.25 | 5.25 | 5.25 | 5.25 | 5.25 | 5.25 |
| | (C)Silica particles | [parts by weight] | 45 | 45 | 45 | 45 | 50 | 35 | 35 |
| | | [wt%] | 27.1 | 27.8 | 27.5 | 27.9 | 30.1 | 23.1 | 23.1 |
| | Si-H/vinyl [mol] | | 1.25 | 1.25 | 1.23 | 1 | - | 1 | 1.25 |
| Physical properties | Hardness [mN] | | 47.4 | 47.5 | 40.2 | 45 | 52 | 27.5 | 29.5 |
| | Tear strength [N/mm] | | 51.8 | 49.2 | 39.5 | 40.9 | 51.2 | 38.6 | 34.7 |
| | Tensile strength [MPa] | | 7.3 | 7.3 | 6.7 | 6.5 | 9.0 | 8.2 | 9.5 |
| | Stretch at break [%] | | 1760 | 1779 | 1246 | 2176 | - | 2600 | 2092 |
| | Stroke at break [mm] | | 3.52 | 3.56 | 2.49 | 4.35 | - | 377.9 | 217.1 |
| | 100% modulus [MPa] | | 0.63 | 0.60 | 0.45 | 0.41 | - | 0.33 | 0.42 |
| | Whole light transmittance (1 mm thickness) | | 85.4 | 87.8 | 84.8 | - | - | - | - |
| | Haze | | 24.7 | 14.8 | 15.6 | - | - | - | - |

(Table 2)

| | Examples | | | | | Comparative Examples |
|---|---|---|---|---|---|---|
| | 1 | 2 | 3 | 4 | 5 | 1,2 |
| (B1) Linear | HMS-082 | HMS-501 | HMS-082 | 88466 | 88466 | 88466 |
| (B2) Branched | -- | -- | HQM-107 | -- | HQM-105 | -- |

[Evaluation method]

The silicon rubber-based curable composition obtained in each of Examples 1-5 and Comparative Examples 1 and 2 was pressed at 170° C and 10 MPa for 10 minutes so as to form into a sheet having a thickness of 1 mm and to be subjected to a primary curing. Then, the sheet was heated at 200° C for 4 hours for the purpose of secondary curing, thereby a sheet-like silicone rubber was obtained. The thus obtained sheet-like silicone rubber was used for evaluations below. The results are illustrated in Table 1 above.

(1) Hardness

The type A durometer hardness in accordance with JIS K 6253 (2006) was measured. Specifically, sheets

having a thickness of 1 mm were laminated to form a specimen having a thickness of at least 6 mm for measurement, on the basis of JIS K6253 (2006).

(2) Tear strength and stroke at break

The JIS K6252 (2007) nicked crescent tear strength and stroke were measured. Specifically, the measurement was carried out by using a universal tester AGS-5kND supplied by Shimadzu Corporation in accordance with JIS K6252 (2007). The specimen had a thickness of 1 mm.

(3) Tensile strength and 100% modulus

The tensile strength and 100% modulus of a dumbbell-shaped No. 3 specimen were measured in accordance with JIS K6251 (2004).

(4) Stretch at break

A dumbbell-shaped No. 3 specimen was produced in accordance with JIS K6251 (2004), and it was subjected to measurement by use of a universal tester AGS-5kND supplied by Shimadzu Corporation. The specimen had a thickness of 1 mm.

(5) Whole light transmittance

Whole light transmittance was measured in accordance with JIS K7165 (2008). For the spectrophotometer, JASCO V-670 spectrometer (trade name, supplied by JASCO Corporation) was used.

(6) Haze

Haze value was measured in accordance with JIS K7361 (1997). For the spectrophotometer, JASCO V-670 spectrometer (trade name, supplied by JASCO Corporation) was used.

As illustrated in Table 1, silicone rubbers having a JIS K6253 (2006) type A durometer hardness of at least 40.0 mN were obtained from the silicone rubber-based curable compositions in Examples 1-5. In contrast, the silicone rubbers obtained from the silicone rubber-based curable compositions in Comparative Examples 1 and 2 had the durometer hardness of less than 40.0 mN. The reason is considered as follows. In Examples 1-5 where the contents of the silica particles (filler amount) was 45 parts by weight (27 to 31 wt%), a sufficient enforcement effect due to the filler was obtained in comparison with Comparative Examples 1 and 2 where the contents of the silica particles (filler amounts) was 35 parts by weight (23.3 wt%).

Industrial Applicability

The present invention is useful for example in the medical field.

## Claims

1. silicone rubber-based curable composition comprising vinyl group-containing organopolysiloxane (A), organohydrogen polysiloxane (B), and silica particles (C),
wherein the content of the silica particles (C) is 26.0 wt% or more and less than 40.0 wt%, and
the composition when cured is capable of forming a silicone rubber exhibiting a JIS K6253 (2006) type A durometer hardness of 40.0 mN or more.

2. The silicone rubber-based curable composition according to claim 1, which is obtained by kneading the vinyl group-containing organopolysiloxane (A), the organohydrogen polysiloxane (B), the silica particles (C), a silane coupling agent (D) and a catalyst (E).

3. The silicone rubber-based curable composition according to claim 2, wherein the kneading is carried out by an integral blend method.

4. The silicone rubber-based curable composition according to any of claims 1 to 3, wherein the vinyl group-containing

organopolysiloxane (A) is vinyl group-containing linear organopolysiloxane (A1).

**5.** The silicone rubber-based curable composition according to claim 4, wherein the vinyl group-containing linear organopolysiloxane (A1) is represented by the following formula (1):

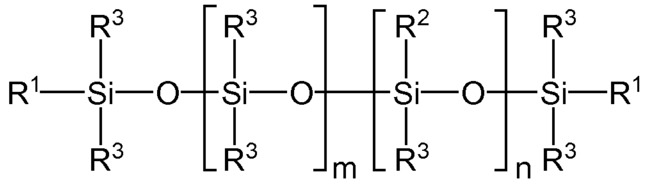

(1)

(in the formula (1), 'm' is an integer in the range of 1000 to 10000; 'n' is an integer in the range of 0 to 1000; each of $R^1$ and $R^2$ is a substituted or unsubstituted alkyl group, alkenyl group or aryl group having a carbon number of 1 to 10, or a hydrocarbon group as a combination thereof; at least one of the plural $R^1$ and $R^2$ is a vinyl group; and $R^3$ is a substituted or unsubstituted alkyl group or aryl group having a carbon number of 1 to 8, or a hydrocarbon group as a combination thereof.)

**6.** The silicone rubber-based curable composition according to any one of claims 1 to 5, wherein the organohydrogen polysiloxane (B) is selected from the group consisting of: linear organohydrogen polysiloxane (B1), branched organohydrogen polysiloxane (B2), and a combination thereof.

**7.** The silicone rubber-based curable composition according to claim 6, wherein the linear organohydrogen polysiloxane (B1) is represented by the following formula (2):

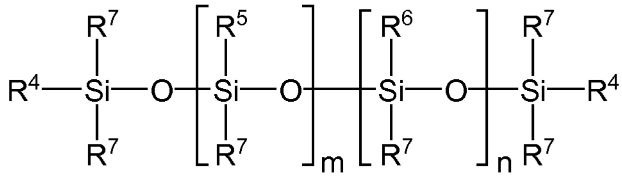

(2)

(in the formula (2), 'm' is an integer in the range of 0 to 300; 'n' is an integer in the range of 0 to 300 (here, m + n = 2 to 300); each of $R^4$, $R^5$ and $R^6$ is a substituted or unsubstituted alkyl group, alkenyl group or aryl group having a carbon number of 1 to 10, or a hydrocarbon group as a combination thereof, or a hydride group; at least one of the plural $R^4$, $R^5$ and $R^6$ is a hydride group; and $R^7$ is a substituted or unsubstituted alkyl group or aryl group having a carbon number of 1 to 8, or a hydrocarbon group as a combination thereof.)

**8.** The silicone rubber-based curable composition according to any one of claims 2 to 7, wherein the catalyst (E) is either platinum or a platinum compound.

**9.** A method for manufacturing a silicone rubber-based curable composition, the method comprising; a step of obtaining a kneaded product by kneading vinyl group-containing organopolysiloxane (A), organohydrogen polysiloxane (B), silica particles (C), a silane coupling agent (D), and a catalyst (E),
wherein the content of the silica particles (C) in the kneaded product is in the range of 40 to 84 parts by weight relative to 100 parts by weight as the total amount of the vinyl group-containing organopolysiloxane (A) and the organohydrogen polysiloxane (B).

**10.** The method for manufacturing a silicone rubber-based curable composition according to claim 9, wherein the step of obtaining the kneaded product comprises kneading a kneaded product of the vinyl group-containing organopolysiloxane (A) and the silane coupling agent (D) with the silica particles (C).

**11.** The method for manufacturing a silicone rubber-based curable composition according to claim 9 or 10 for manufacturing the silicone rubber-based curable composition according to any one of claims 1 to 8.

**12.** A method for manufacturing a silicone rubber, the method comprising:

a step of obtaining a silicone rubber-based curable composition by kneading vinyl group-containing organopolysiloxane (A), organohydrogen polysiloxane (B), silica particles (C), a silane coupling agent (D), and a catalyst (E), and
a step of forming a silicone rubber by curing the silicone rubber-based curable composition,
wherein in the step of obtaining the silicone rubber-based curable composition, the content of the silica particles (C) is in the range of 40 to 84 parts by weight relative to 100 parts by weight as the total amount of the vinyl group-containing organopolysiloxane (A) and the organohydrogen polysiloxane (B).

**13.** The method for manufacturing a silicone rubber according to claim 12, wherein the step of obtaining the silicone rubber-based curable composition comprises kneading a kneaded product of the vinyl group-containing organopolysiloxane (A) and the silane coupling agent (D) with the silica particles (C).

**14.** A silicone rubber obtained by curing the silicone rubber-based curable composition according to any one of claims 1 to 8.

**15.** A molded article obtained by curing the silicone rubber-based curable composition according to any one of claims 1 to 8.

**16.** A tube formed of the molded article according to claim 15.

**INTERNATIONAL SEARCH REPORT**

International application No. PCT/JP2013/070153

A. CLASSIFICATION OF SUBJECT MATTER

*C08L83/07*(2006.01)i, *C08K3/36*(2006.01)i, *C08K5/54*(2006.01)i, *C08L83/05*(2006.01)i

According to International Patent Classification (IPC) or to both national classification and IPC

B. FIELDS SEARCHED

Minimum documentation searched (classification system followed by classification symbols)
C08L83/00-83/16, C08K3/00-13/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-500306 A (Medtronic, Inc.), 09 January 2001 (09.01.2001), claims; page 13, explanation of fig. 2; page 21, [particular example] & US 5948539 A & WO 1998/010433 A1 | 1-16<br>16 |
| X<br>Y | JP 2010-13495 A (Momentive Performance Materials Japan L.L.C.), 21 January 2010 (21.01.2010), claims; paragraph [0015]; examples 5 to 6 (Family: none) | 1-16<br>16 |
| X<br>Y | JP 63-207854 A (Toray Silicone Co., Ltd.), 29 August 1988 (29.08.1988), claims; page 4, lower right column, line 19; examples (Family: none) | 1-16<br>16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
22 October, 2013 (22.10.13)

Date of mailing of the international search report
19 November, 2013 (19.11.13)

Name and mailing address of the ISA/
Japanese Patent Office

Facsimile No.

Authorized officer

Telephone No.

Form PCT/ISA/210 (second sheet) (July 2009)

**INTERNATIONAL SEARCH REPORT**

International application No.
PCT/JP2013/070153

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2003-137530 A (GE Toshiba Silicones Co., Ltd.),<br>14 May 2003 (14.05.2003),<br>claims; example 3<br>(Family: none) | 1-15<br>16 |
| X<br>Y | JP 7-3034 A (Shin-Etsu Chemical Co., Ltd.),<br>06 January 1995 (06.01.1995),<br>claims; paragraph [0034]; example 1<br>& US 5506303 A | 1-15<br>16 |
| X<br>Y | JP 4-293963 A (Dow Corning Corp.),<br>19 October 1992 (19.10.1992),<br>claims; example 2<br>& EP 489518 A1 | 1-15<br>16 |
| X<br>Y | JP 3-146560 A (Dow Corning Toray Silicone Co., Ltd.),<br>21 June 1991 (21.06.1991),<br>claims; example 2<br>& US 5153244 A & EP 426137 A1 | 1-15<br>16 |
| X<br>Y | JP 8-20726 A (Shin-Etsu Chemical Co., Ltd.),<br>23 January 1996 (23.01.1996),<br>claims; example 1<br>(Family: none) | 1-15<br>16 |
| A | JP 2012-36288 A (Sumitomo Bakelite Co., Ltd.),<br>23 February 2012 (23.02.2012),<br>claims; examples<br>(Family: none) | 1-16 |
| A | JP 2012-12448 A (Sumitomo Bakelite Co., Ltd.),<br>19 January 2012 (19.01.2012),<br>claims; examples<br>(Family: none) | 1-16 |
| A | JP 2011-162714 A (Sumitomo Bakelite Co., Ltd.),<br>25 August 2011 (25.08.2011),<br>claims; examples<br>(Family: none) | 1-16 |
| P,X | WO 2012/133639 A1 (Sumitomo Bakelite Co., Ltd.),<br>04 October 2012 (04.10.2012),<br>claims; tables 1, 2<br>(Family: none) | 1-16 |
| P,X | JP 2013-82907 A (Sumitomo Bakelite Co., Ltd.),<br>09 May 2013 (09.05.2013),<br>claims; table 1<br>(Family: none) | 1-16 |

Form PCT/ISA/210 (continuation of second sheet) (July 2009)

**INTERNATIONAL SEARCH REPORT**

International application No.
PCT/JP2013/070153

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2013/042707 A1 (Sumitomo Bakelite Co., Ltd.), 28 March 2013 (28.03.2013), claims; tables 1, 2 & JP 2013-67677 A | 1-16 |
| P,X | JP 2012-211232 A (Sumitomo Bakelite Co., Ltd.), 01 November 2012 (01.11.2012), claims; examples (Family: none) | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H071995331079 B
- JP H071995228782 B
- JP H071995258551 B
- US P3884866 A
- US P4539357 A
- US P4061609 A
- US P3671480 A